# EUROPÄISCHE PATENTSCHRIFT

(11) **EP 3 612 317 B1**
(45) Veröffentlichungstag und Bekanntmachung des Hinweises auf die Patenterteilung: **11.05.2022**
(21) Anmeldenummer: 18727869.2
(22) Anmeldetag: 19.04.2018
(51) Int. Cl.: B05B 7/00, A01M 7/00, B05B 7/24, B05B 12/18, B05B 12/00

(54) **GEBLÄSESPRÜHVORRICHTUNG**
FAN SPRAY DEVICE
DISPOSITIF DE PULVÉRISATION DE SOUFFLANTE

(30) Priorität: 19.04.2017 CH 5242017
(43) Veröffentlichungstag der Anmeldung: 26.02.2020
(73) Patentinhaber: Birchmeier Sprühtechnik AG, 5608 Stetten (CH)
(72) Erfinder: ZWAHLEN, Jürg, 9495 Triesen (LI); ZAUGG, Michael, 5000 Aarau (CH); GLENZ, Harald, 3970 Salgesch (CH); RIMPL, Frank, 1950 Sion (CH); DEMONT, Sébastien, 5608 Stetten (CH)
(74) Vertreter: Dittmann, Rolf
(86) Internationale Anmeldenummer: PCT/IB2018/052738
(87) Internationale Veröffentlichungsnummer: WO 2018/193406

(56) Entgegenhaltungen:
- WO-A1-2012/150614
- FR-A1- 3 023 495
- KR-A- 20120 056 541

## Beschreibung

### TECHNISCHES GEBIET

Die Erfindung betrifft eine Gebläsesprühvorrichtung nach dem Oberbegriff des Patentanspruchs 1 und ein Verfahren zur Erzeugung eines Sprühnebels mit einer solchen Gebläsesprühvorrichtung nach dem Oberbegriff des Patentanspruchs 15.

### STAND DER TECHNIK

Solche Gebläsesprühvorrichtungen, bekannt als Motorsprühgeräte, werden zum Beispiel beim Pflanzenschutz in der Landwirtschaft oder im Gartenbau, zur Schädlingsbekämpfung eingesetzt.

Ein solches Motorsprühgerät ist im Wesentlichen von einem auf dem Rücken tragbaren Spritzmittelbehälter, einen Benzinmotor und einem Gebläse gebildet, und ist beispielsweise aus CH-A-327 997 bekannt. Dem Ansaugraum des Gebläses ist ein Luftfilter vorgeschaltet und der Druckraum des Gebläses steht mit einem weiten Druckluftschlauch sowie einer engeren Zuluftleitung in Verbindung. Diese Leitung mündet mit ihrem anderen Ende knapp über dem Boden des Spritzmittelbehälters, so dass die austretende Druckluft die Sprühflüssigkeit im Behälter umrührt. Die Abluft verlässt den Behälter über eine Abluftleitung. Am Austrittsende des Druckluftschlauchs ist eine Zerstäuberdüse vorgesehen, an welcher eine Zufuhrleitung für die Sprühflüssigkeit und die Abluftleitung angeschlossen sind. Bis lang werden solche Motorsprühgeräte mit Benzinmotoren betrieben, welche relativ lärmig sind und Abgase erzeugen. Ein weiterer Nachteil von Benzinmotoren ist die unzureichende Einstellbarkeit der Strömungsgeschwindigkeit des Luftstromes. Dieser Umstand ist begründet mit dem Funktionsprinzip solcher Motorsprühgeräte. Ohne eine hohe Luftaustrittsgeschwindigkeit wären die heutigen Motorsprühgeräte nicht in der Lage, die zugeführte Sprühflüssigkeit zu zerstäuben. Diese hohen Luftgeschwindigkeiten können jedoch zu Pflanzenschäden führen. Ausserdem kann es vorkommen, dass als Folge der hohen Luftgeschwindigkeit der Wirkstoff an der Pflanze vorbei gesprüht wird und sich nicht auf der Pflanze anlagert.

Um eine verbesserte Zerstäubung eines solchen Motorsprühgerätes zu erhalten, ist in DE-A-102012012800 eine Sprüheinrichtung für ein handgeführtes Blasgerät beschrieben, welche eine Luftkanalanordnung und eine Sprühmitteldüse umfasst, wobei sich die Luftkanalanordnung entlang einer die Sprührichtung vorgegebene Längsachse erstreckt. Die Luftkanalanordnung umfasst zwei Ausgangskanalabschnitte, in denen der Blasluftstrom in zwei aus den beiden Luftdüsen austretende Teilluftströme aufgeteilt wird. Die beiden Ausgangskanalabschnitte münden derart in zwei bezogen auf die Längsachse in einer Seitenrichtung nebeneinander angeordnete Luftdüsen, dass sich zwischen den beiden Teilluftströmen ein luftströmungsfreier Raum ausbildet. Die Sprühmitteldüse ist im luftströmungsfreien Raum positioniert, wobei ein Sprühmittel mittels der Sprühmitteldüse im luftströmungsfreien Raum zu Tröpfchen zerstäubt in den luftströmungsfreien Raum eingebracht wird. Die Luftströmungsgeschwindigkeit der beiden Teilluftströme liegt im Bereich von 30 m/s bis 120 m/s, vorzugsweise bei 70 m/s. Die Tröpfchengeschwindigkeit des zerstäubten Sprühmittels liegt im Bereich von 2 m/s bis 40 m/s, vorzugsweise bei 10 m/s. Der Sprühmitteldruck liegt im Bereich von 2 bar bis 15 bar, vorzugsweise bei 5 bar. Wenn die Teilluftströme und das zerstäubte Sprühmittel aufeinander treffen entsteht ein Gemisch, das eine Strömungsgeschwindigkeit von 10 m/s bis 80 m/s, insbesondere 40 m/s, aufweist.

Bei dem obigen Motorsprühgerät ergeben sich die selben Nachteile wie vorhin beschrieben.

In KR-A-20120056541 ist ein tragbares Sprühgerät beschrieben mit einem Tank, einer elektrischen Pumpe, einem langen Blasrohr mit einem Gebläse direkt am Eingang und einer Sprühdüse unmittelbar vor dem Ausgang des Blasrohres. Das Blasrohr hat einen gleichbleibenden Durchmesser über seine gesamte Länge. Die Sprühdüse ist über einen Schlauch mit dem Tank verbunden. Am Blasrohr ist ferner ein Hebel vorgesehen, mit welchem ein manuell betätigbares Ventil im Schlauch geöffnet und geschlossen werden kann. Einerseits ist der Pumpenmotor über eine Pumpensteuerung und einen Betriebsschalter mit dem Pluspol einer Batterie verbunden, und andererseits ist der Gebläsemotor über eine Gebläsesteuerung und den Betriebsschalter mit dem Pluspol der Batterie verbunden. Dieser Betriebsschalter ist im Hebel am Blasrohr angeordnet. Ferner ist am Minuspol der Batterie ein Schalter für den Druck vorgesehen, der elektrisch an die Pumpensteuerung und an die Gebläsesteuerung angeschlossen ist. Dieser Schalter für den Druck ist an der Pumpe angebracht. Wenn der Druck an der Pumpe zu hoch ist, schaltet der Schalter ab, so dass die Pumpensteuerung und die Gebläsesteuerung von der Batterie abgekoppelt sind. Mittels eines einfachen Druckschalters werden das Gebläse und die Pumpe ein- und ausgeschaltet. Eine regelbare Einstellung der Luftgeschwindigkeit und des Sprühmitteldrucks ist mit diesem Sprühgerät nicht vorgesehen.

### AUFGABE DER ERFINDUNG

Der vorliegenden Erfindung liegt nun die Aufgabe zugrunde, eine tragbare Gebläsesprühvorrichtung vorzusehen, welche einen effizienten und umweltschonenden Sprühmitteleinsatz und ein homogenes Sprühbild ermöglicht. Ferner ist es Aufgabe der Erfindung, ein Verfahren zur Erzeugung eines Sprühnebels mit einer solchen Gebläsesprühvorrichtung anzugeben.

Diese Aufgaben werden durch eine Gebläsesprühvorrichtung mit den Merkmalen des Patentanspruchs 1 und durch ein Verfahren zur Erzeugung eines Sprühnebels mit den Merkmalen des Patentanspruchs 15 gelöst.

Die vorliegende Erfindung beruht auf der Erkenntnis, dass erst das Zusammenwirken einer regelbaren Einstellung der Luftströmungsgeschwindigkeit und einer regelbaren Einstellung des Sprühmitteldrucks mit der richtigen Auswahl der Sprühmitteldüse zum gewünschten Sprühbild des zu erzeugenden Sprühnebels führt. Der Sprühmitteldruck kann jedoch auch fest vorgegeben sein, wenn der Anwendungsbereich eingeschränkt ist.

Die Erfindung hat den Vorteil, dass ein definiertes Sprühbild des Sprühnebels erzeugt wird, wobei die Gebläsesprühvorrichtung mit einer einstellbaren Luftströmungsgeschwindigkeit betrieben wird. Ein weiterer Vorteil der Erfindung ist es, dass die Gebläsesprühvorrichtung auf die unterschiedlichen Anforderungen für die jeweiligen Anwendungen genau angepasst werden kann, indem die Luftgeschwindigkeit genau geregelt und die Sprühmittelmenge und die Tropfengrösse durch die richtige Wahl von Düse und Druck eingestellt wird. Die erfindungsgemässe Gebläsesprühvorrichtung ermöglicht, durch die richtige Auswahl der obigen Parameter und der Eingrenzung der Einflussgrössen, dem durch eine gegebene Anwendung erforderlichen Sprühbild wesentlich besser zu entsprechen, als mit den heute bekannten Methoden der Gebläsesprühtechnik. Dabei wird der Luftstrom nur zur Beförderung der Tröpfchen im Sprühnebel, jedoch nicht für die Tropfenbildung benötigt.

Die erfindungsgemässe Gebläsesprühvorrichtung gemäss Anspruch 1 ist mit einem Gehäuse versehen, welches ein elektrisch angetriebenes Gebläse mit einem Schaufelrad und eine Sprühdüse umfasst, und eine Flüssigkeitszufuhrleitung aufweist, die in die Sprühdüse mündet, wobei das Gehäuse einen trichterförmigen Ansaugkanal und einen rohrförmigen Ausblaskanal aufweist und im rohrförmigen Ausblaskanal in Strömungsrichtung nach dem Schaufelrad Leitschaufeln vorgesehen sind, welche derart ausgebildet und angeordnet sind, dass die durch das Schaufelrad erzeugten Verwirbelungen in eine gleichmässige, drallfreie oder annähernd drallfreie Luftströmung in axialer Richtung übergehen. Die Sprühdüse ist in der Längsachse im Ausblaskanal angeordnet, so dass die drallfreie oder annähernd drallfreie Luftströmung den aus der Sprühdüse austretenden Sprühnebel ummantelt. Und ein elektrisches betätigtes Ventil ist in der Flüssigkeitszufuhrleitung vorgesehen, um die Flüssigkeitszufuhr zur Sprühdüse ein- und auszuschalten. Ferner ist eine elektronische Steuerung mit einer Regeleinheit für das elektrische Gebläse vorgesehen.

Es ist von Vorteil, wenn das elektrische Gebläse gemäss Anspruch 2 in einem länglichen, rohförmigen Gehäuse angeordnet ist, welches gleichzeitig zur mechanischen Befestigung der Sprühdüse dient.

Dabei hat es sich bewährt, das elektrische Gebläse oder die Sprüh-Gebläse-Einheiten gemäss Anspruch 3 schwimmend im Gehäuse zu befestigen und oder zu lagern.

Vorteilhafterweise ist das Gebläse gemäss Anspruch 4 im Ausblaskanal montiert, und die Sprühdüse ist in Strömungsrichtung auf einem ersten Abstand zum Gebläse im Ausblaskanal und auf einem zweiten Abstand zum Auslauf des Ausblaskanals angeordnet.

Dabei weist gemäss Anspruch 5 der Ansaugkanal mit Vorteil eine Einströmöffnung mit einem ersten, grossen Querschnitt und eine Ausströmöffnung mit einem zweiten, kleineren Querschnitt auf.

In einer bevorzugten Ausführungsform der Gebläsesprühvorrichtung gemäss Anspruch 6 ist die Sprühdüse eine Vollkegeldüse.

In einer anderen bevorzugten Ausführungsform der Gebläsesprühvorrichtung nach Anspruch 7 ist die Sprühdüse eine Hohlkegeldüse.

In einer weiteren bevorzugten Ausführungsform der Gebläsesprühvorrichtung nach Anspruch 8 ist die Sprühdüse eine Injektordüse.

In einer anderen bevorzugten Ausführungsform der Gebläsesprühvorrichtung nach Anspruch 9 ist die Sprühdüse eine Flachstrahldüse.

In einer weiteren bevorzugten Ausführungsform der Gebläsesprühvorrichtung nach Anspruch 10 ist die Sprühdüse eine Mehrstoffdüse.

In einer anderen bevorzugten Ausführungsform der Gebläsesprühvorrichtung nach Anspruch 11 ist die Sprühdüse ein Piezo-Ultraschallzerstäuber.

In einer weiteren bevorzugten Ausführungsform der Gebläsesprühvorrichtung nach Anspruch 12 ist die Sprühdüse eine Spinning Disk.

Gemäss Anspruch 13 ist die Gebläsesprühvorrichtung bevorzugt tragbar.

Die Gebläsesprühvorrichtung kann aber auch gemäss Anspruch 14 auf einem Fahrgestell angebracht sein.

Beim Verfahren zur Erzeugung eines Sprühnebels gemäss Anspruch 15 mit einer erfindungsgemässen Gebläsesprühvorrichtung und einem Sprühgerät mit einer Druckregelung, wird eine Sprühflüssigkeit für die jeweilige Anwendung ausgewählt und die Düse wird aus einer Auswahl von Sprühdüsen bestimmt. Die Düse wird aufgrund von Druck, Sprühwinkel, Durchflussmenge und Tropfengrösse für die Anwendung ausgewählt. Anschliessend wird die Sprühflüssigkeit mit einem für die Anwendung und oder für die Auswahl eingestellten Druck beaufschlagt und die Luftströmungsgeschwindigkeit des Gebläses wird für die Anwendung eingestellt.

### BESCHREIBUNG DER ERFINDUNG

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispiels näher erläutert wird. Es zeigt:
- Fig. 1: ein akkubetriebenes Rückensprühgerät mit einer Gebläsesprühvorrichtung in perspektivischer Darstellung in einer Gehäusehälfte,
- Fig. 2: eine vergrösserte Darstellung der Gebläsesprühvorrichtung der Figur 1,
- Fig. 3: einen Querschnitt durch eine zweite Ausführung der Gebläsesprühvorrichtung,
- Fig. 4: die Gebläsesprühvorrichtung der Figur 3 in perspektivischer Ansicht,
- Fig. 5: die Sprüh-Gebläse-Einheit in perspektivischer Ansicht,
- Fig. 6: einen Querschnitt durch die Sprüh-Gebläse-Einheit der Figur 5,
- Fig. 7: eine Darstellung der Geschwindigkeitsverteilung der Luftströmung am Austritt der Sprühdüse (Eindüsung),
- Fig. 8: das Strömungsbild von der durch das Schaufelrad erzeugten rotierenden Luftströmung in eine durch Leitschaufeln überführte gleichmässige, drallfreie Luftströmung,
- Fig. 9: ein perspektivisches Schaubild der Luftströmung durch die gesamte Gebläsesprühvorrichtung, und
- Fig. 10: eine perspektivische Darstellung der in Figur 8 gezeigten Luftströmung.

In den Figuren sind für dieselben Elemente jeweils dieselben Bezugszeichen verwendet worden und erstmalige Erklärungen betreffen alle Figuren, wenn nicht ausdrücklich anders erwähnt.

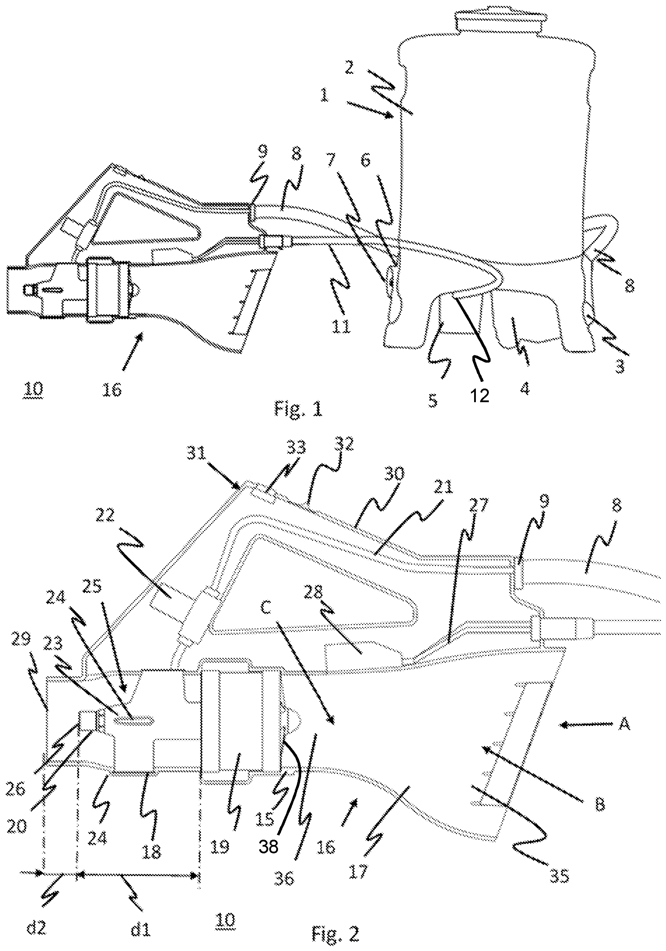

In der Figur 1 ist ein akkubetriebenes Rückensprühgerät 1 der Firma Birchmeier Sprühtechnik AG, CH-5608 Stetten dargestellt, welches unter der Bezeichnung REC 15 auf dem Markt vertrieben wird. Dieses Sprühgerät 1 weist einen Flüssigkeitstank 2, einen Windkessel 3, eine elektrische Pumpe 4 und eine Batterie oder Akku 5 auf. Am Windkessel 3 ist ein Drucksensor 6 vorgesehen, der an einem Druckregler 7 am Rückensprühgerät 1 angebracht ist. Mit dem Druckregler 7 kann man den Druck auf die Sprühflüssigkeit einstellen. Am Windkessel 3 ist ferner eine Flüssigkeitszufuhrleitung 8 angeschlossen, welche mit einem Anschluss 9 an einer tragbaren Gebläsesprühvorrichtung 10 lösbar befestigt ist. Ferner ist die Gebläsesprühvorrichtung 10 mittels eines elektrisches Kabels 11 mit einer elektrischen Steckverbindung 12 an der Batterie 5 angeschlossen.

In Figur 2 ist die Gebläsesprühvorrichtung 10 in einer vergrösserten Darstellung gezeigt, wobei die vordere Gehäusehälfte entfernt ist, so dass nur die hintere Gehäusehälfte 15 des Gehäuses 16 ersichtlich ist. Das Gehäuse 16 weist einen trichterförmigen Ansaugkanal 17 und einen rohrförmigen Ausblaskanal 18 auf. Ein elektrisches Gebläse 19 mit einem Schaufelrad 38 ist vollständig von der Gehäusewand umgeben und im Ausblaskanal 18 befestigt. Um Vibrationen und Motorgeräusche zu verringern, kann das elektrische Gebläse 19 schwimmend im Ausblaskanal 18 befestigt und oder gelagert sein, wie unten zur zweiten Ausführung der Gebläsesprühvorrichtung näher beschrieben ist. Im Ausblaskanal 18 sind - hier nicht dargestellte - Leitschaufeln innen an der Gehäusewand vorgesehen, die in Achsrichtung des Ausblaskanals 18 in Strömungsrichtung A nach dem Schaufelrad 38 angeordnet. Diese Leitschaufeln können einen geringen Winkel bis 10° zur Achsrichtung aufweisen. Durch diese Leitschaufeln werden die durch das Schaufelrad 38 erzeugten Verwirbelungen in eine drallfrei, oder annähernd drallfreie Luftströmung überführt. In Strömungsrichtung A ist nach dem elektrischen Gebläse 19 eine Sprühdüse 20 im Ausblaskanal 18 montiert, welche an einer Flüssigkeitszufuhrleitung 21 und einem vorgeschalteten elektrisch betätigten Ventil 22 angeschlossen ist. Mit dem Ventil oder Magnetventil 22 kann der Zufluss von Sprühflüssigkeit eingeschaltet werden. Die Sprühdüse 20 ist auf dem vorderen Ende eines Befestigungsrohrs 23 montiert, welches mit vier Stützen 24 am Gehäuse 16 angebracht ist, so dass zwischen dem Befestigungsrohr 23 und der Innenwand des Ausblaskanals 18 ein offener Ringraum 25 besteht. Die Sprühdüse 20 ist am vorderen Ende des Befestigungsrohrs 23 montiert, so dass sich mit dem Ausströmen der Sprühflüssigkeit aus der Sprühdüse 20 eine Vorzerstäubung ergibt. Durch eine geeignete Düsenauswahl und Druckbeaufschlagung kann die Tropfengrösse eingestellt werden. Ferner ist ein elektrisches Kabel 27 mit einer elektronischen Steuerung 28 für das Gebläse 19 im Gehäuse 16 vorgesehen. Mit der Steuerung 28 kann die Drehgeschwindigkeit des Gebläses 19, d.h. die Luftgeschwindigkeit, eingestellt werden. Das Gehäuse 16 weist des Weiteren einen winkelförmigen Handgriff 30 auf, in welchem die Flüssigkeitszufuhrleitung 21 und das Ventil 22 vorgesehen sind. Im Winkelbereich 31 des Handgriffs 30 ist ein Schalter 32 für das Ventil 22 und eine Regeleinheit 33 für die Steuerung 28 angeordnet, womit man die genaue Drehgeschwindigkeit des Gebläses 19 einstellen kann. Die Regeleinheit 33 kann ein analoger Drehregler sein, oder auch eine digitale Einstellung beinhalten.

Die Sprühdüse 20 ist nun auf einem Abstand d1 von der Ausblasseite des Gebläses 19 angeordnet. Die Sprühdüse 20 weist eine Mündung 26 und der Ausblaskanal 18 weist einen Auslauf 29 auf. Der Sprühwinkel wird primär durch die geeignete Wahl der Sprühdüse 20 bestimmt. Die Mündung 26 befindet sich innerhalb des Ausblaskanals 18 auf einem Abstand d2 vom Auslauf 29, so dass der Sprühnebel die Wandung des Ausblaskanals 18 nicht benetzen und sich ungehindert ausbilden kann.

Der trichterförmige Ansaugkanal 17 weist eine Einströmöffnung 35 mit einem grossen Querschnitt B und eine Ausströmöffnung 36 mit einem kleineren Querschnitt C auf. Das Verhältnis zwischen dem grossen Querschnitt B und dem kleinen Querschnitt C ist strömungstechnisch optimal ausgelegt, um die Luft am Ausgang des Gebläses mit einer Strömungsgeschwindigkeit von etwa 5 bis 120 m/s ausströmen zu lassen.

Die Eintrittsöffnung ist so gross gewählt, dass bei den typischerweise auftretenden Austrittsströmungsgeschwindigkeiten die Ansauggeschwindigkeit niedrig ist und dadurch die Gefahr von Ansaugen (Blätter etc.) minimiert ist. Im vorliegenden Fall beträgt das Verhältnis 1:4, es kann aber auch tiefer oder höher liegen.

Die Sprühdüse 20 ist hier mit dem Befestigungsrohr 23 zentral im Ausblaskanal 18 angeordnet. Sie kann aber auch dezentral oder direkt in der Innenwand des Ausblaskanals 18 angeordnet sein. Die Sprühdüse 20 wird je nach Anwendung aus einem grösseren Düsensortiment ausgewählt. Als Sprühdüsen 20 haben sich eine Vollkegeldüse, eine Hohlkegeldüse, eine Flachstrahldüse und eine Injektordüse bewährt. Auch können ein sog. Spinning Disk, eine Mehrstoffdüse oder einen Piezo-Ultraschallzerstäuber eingesetzt werden.

Die obige tragbare Gebläsesprühvorrichtung 10 ermöglicht nun eine genaue Einstellung des gewünschten Sprühbildes für den zu erzeugenden Sprühnebel, indem der Druck der zugeführten Sprühflüssigkeit, die Luftströmungsgeschwindigkeit der ausgeblasenen Luft und die Vorzerstäubung durch die richtige Auswahl aus verschiedenen Sprühdüsen 20 genau eingestellt werden können. Damit wird erreicht, dass weniger chemische Sprühflüssigkeit zum Beispiel beim Pflanzenschutz benötigt wird. Es hat sich insbesondere herausgestellt, dass eine zu hohe Luftgeschwindigkeit bei empfindlichen Pflanzen Kulturschäden verursacht und/oder die Pflanzen eine unzureichende Blattbenetzung erfahren. Bei einer geringeren Luftgeschwindigkeit werden die Pflanzenblätter nur verwirbelt, so dass eine optimale Blattbenetzung ohne Kulturschäden erfolgt. Auch kann durch die richtige Auswahl der Düse die Tropfengrösse eingestellt werden, um Aerosolbildung oder Abdrift des Sprühnebels möglichst gering zu halten oder eine grosse Reichweite des Sprühnebels zu erreichen.

In der Praxis wird das Rückensprühgerät 1 mit dem Druckregler und die Gebläsesprühvorrichtung 10 verwendet, wobei die benötigte elektrische Energie von der Batterie 5 geliefert wird. Es besteht aber auch die Möglichkeit, dass ein Rückensprühgerät ohne Druckregler zur Anwendung kommt, wobei dann die möglichen Anwendungen eingeschränkt sind, beziehungsweise das Ergebnis nicht optimal ist. Andererseits kann ein Sprühgerät auch auf einem nicht-motorisierten oder motorisierten Fahrgestell eingesetzt werden, wobei die Gebläsesprühvorrichtung 10 entweder fest, in X-, Y- und/oder Z-Richtung verstellbar und/oder schwenkbar auf dem Fahrgestell angebracht ist. In einem solchen Fall können auch mehrere Gebläsesprühvorrichtungen 10 oder Sprüh-Gebläse-Einheiten 40 zum Einsatz kommen. Bei Verwendung mehrerer Gebläsesprühvorrichtungen 10 oder Sprüh-Gebläse-Einheiten 40 kann die Versorgung mit elektrischer Energie und Sprühflüssigkeit zentral erfolgen, mit der Möglichkeit einer individuellen Einstellung der einzelnen Gebläsesprühvorrichtungen 10 oder Sprüh-Gebläse-Einheiten 40.

Des Weiteren kann der erzeugte Sprühnebel optimal in die richtige Luftströmung eingebracht werden. Dazu werden verschiedene elektronische Kontrolleinheiten benötigt. Beispielsweise kann eine elektronische Kontrolleinheit vorgesehen sein, welche dafür sorgt, dass die Sprühflüssigkeit erst in den Luftstrahl eingebracht wird, wenn die eingestellte Luftströmungsgeschwindigkeit erreicht worden ist. Auch kann eine elektronische Kontrolleinheit vorgesehen sein, welche dazu dient, dass die Sprühflüssigkeit in Abhängigkeit zur Luftströmungsgeschwindigkeit eingebracht wird, was bedeutet, dass die Sprühflüssigkeit erst nach einer gewissen Zeitverzögerung in den Luftstrom eingebracht wird oder weniger Sprühflüssigkeit eingebracht wird, wenn die Luftströmungsgeschwindigkeit gesenkt wird. Auch kann die Zufuhr von Sprühflüssigkeit gänzlich mit einer gewissen Vorlaufzeit abgestellt werden, bevor die Luftströmungsgeschwindigkeit gedrosselt oder abgestellt wird. Damit wird verhindert, dass Sprühflüssigkeit nachtropft.

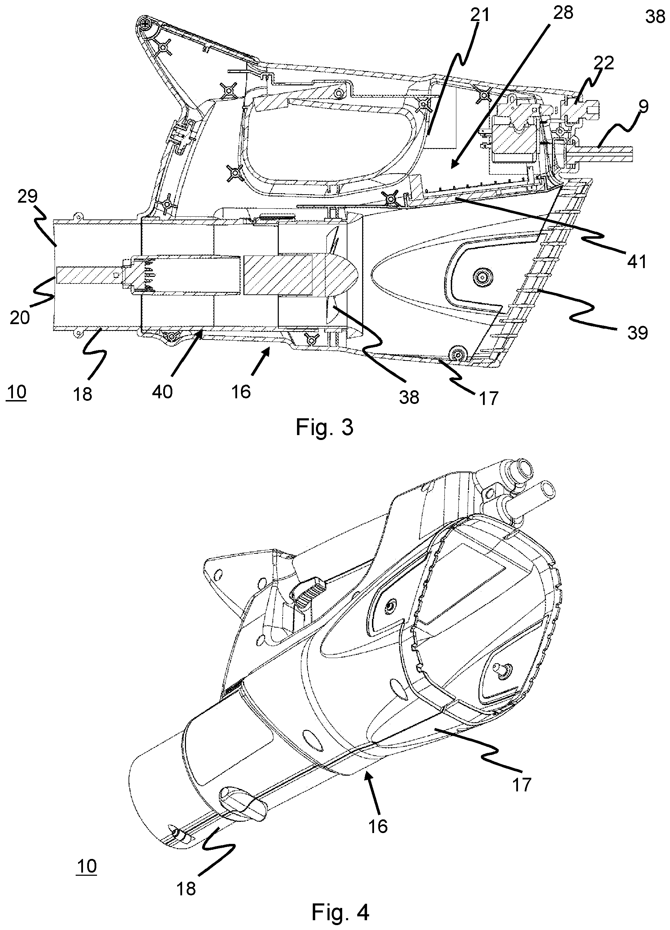

In den Figuren 3 und 4 ist eine zweite Ausführung der Gebläsesprühvorrichtung 10 in einem Querschnitt dargestellt. Dieselben Elemente sind mit denselben Bezugszeichen wie in Figur 2 angegeben. Die elektrische Sprüh-Gebläse-Einheit ist hier mit dem Bezugszeichen 40 versehen. Die elektronische Steuerung 28 ist mit einem Kühlkörper 41 versehen, welcher in einer entsprechenden Öffnung im Ansaugkanal 17 eingebettet ist. Der trichterförmige Ansaugkanal 17 weist in diesem Bereich einen wesentlichen grösseren Querschnitt auf als der Querschnitt im Ausblaskanal 18, so dass hier eine grössere nutzbare Kühlfläche zur Verfügung steht, so dass eine sehr effiziente Kühlung der elektronischen Steuerung 28 durch den Kühlkörper 41 erreicht wird. Ausserdem herrscht hier eine geringere Luftgeschwindigkeit. Im Vergleich zu einer Kühlung mit schneller Blasluft im Ausblaskanal 18, wird eine weitere Geräuschverminderung bewirkt.

Die Eingangsöffnung des Ansaugkanals 17 ist mit einem Gitter 39 versehen, so dass man nicht versehentlich mit der Hand in den Ansaugkanal 17 gelangen kann. Auch ist der Schaufelrad 38 genügend weit entfernt von der Eingangsöffnung, um Verletzungen zu verhindern.

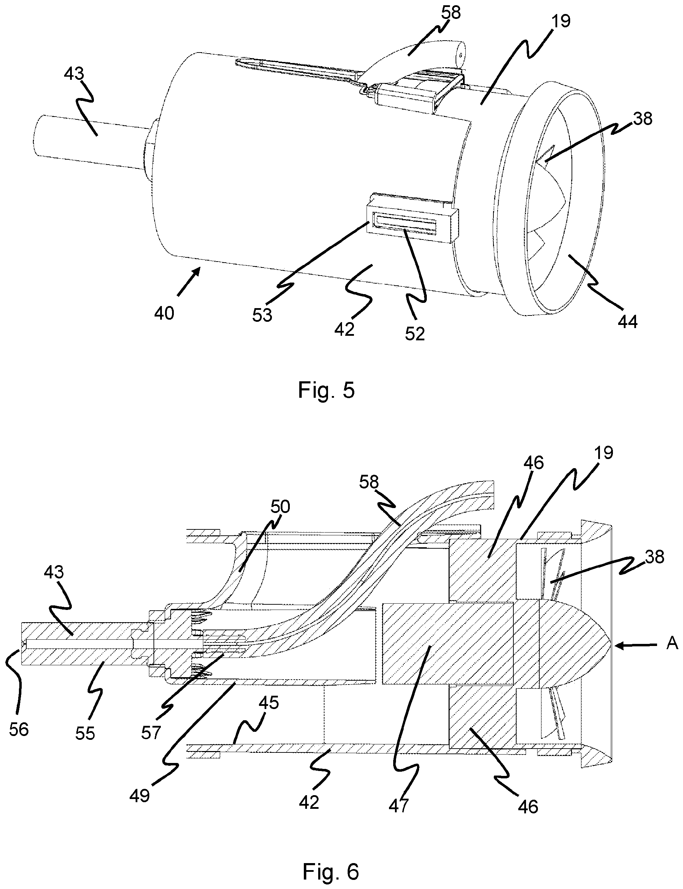

In den Figuren 5 und 6 ist die Sprüh-Gebläse-Einheit 40 mit dem Schaufelrad 38 näher dargestellt.

Der wesentliche Unterschied zur ersten Ausführung der Figur 2 ist, dass das Gebläse 19 in einem länglichen, rohförmigen Gehäuse 42 angeordnet ist, welches gleichzeitig zur mechanischen Befestigung der Sprühdüse 43 dient. Das Gehäuse 42 weist eine ringförmige Einlauflippe 44 auf. Durch die Einlauflippe 44 wird die Luft optimal angesaugt, so dass eine wesentliche Verringerung der Geräuschentwicklung erreicht wird. An der Innenwand 45 des Gehäuses 42 sind zwei, sich gegenüberliegenden Leitschaufeln 46 vorgesehen, welche im Wesentlichen parallel zur Achsrichtung A ausgerichtet sind. Diese Leitschaufeln können auch einen geringen Winkel bis etwa 10° zur Achsrichtung aufweisen. Auch können diese Leitschaufeln 46 stromlinienförmig wie ein Flügel ausgebildet sein. Hinter dem Schaufelrad 38 ist der elektrische Antrieb 47 vorgesehen. Die Befestigung 49 der Sprühdüse 43 ist nun so ausgebildet, dass diese sich im Windschatten des elektrischen Antriebs oder Motors 47 befindet, so dass die gleichmässige drallfreie oder annähernd drallfreie Luftströmung, welche durch die Leitschaufeln 46 erzeugt wird, nicht gestört werden kann. Dazu ist auch die Aufhängung 50 der Befestigung 49 am Gehäuse 42 abgerundet und gebogen vorgesehen. Diese Aufhängung 50 ist sehr flach ausgebildet, so dass keine störenden Verwirbelungen entstehen.

Um die Übertragung von Vibrationen des Gebläses 19 auf das Gehäuse 16 zu minimieren, ist das Gehäuse 42 schwimmend im Gehäuse 16 gelagert. Dazu sind zwei sich gegenüberliegenden an der Aussenwand des Gehäuses 42 angebrachten Querstege 52 vorgesehen, die von einem quaderförmigen Dämpfungselement 53 aus einem geeigneten flexiblen Material wie Gummi umgeben sind. Die Innenwand des Gehäuses 16 (siehe Figur 3) umgreift mit einer Kontur mit punktuellen Auflagen - nicht dargestellt - das Dämpfungselement 53, so dass der Übertragung von Schall und Vibrationen durch den elektrischen Antrieb 47, dem Schaufelrad 38 und Luftverwirbelungen in der Sprüh-Gebläse-Einheit 40 entgegengewirkt wird.

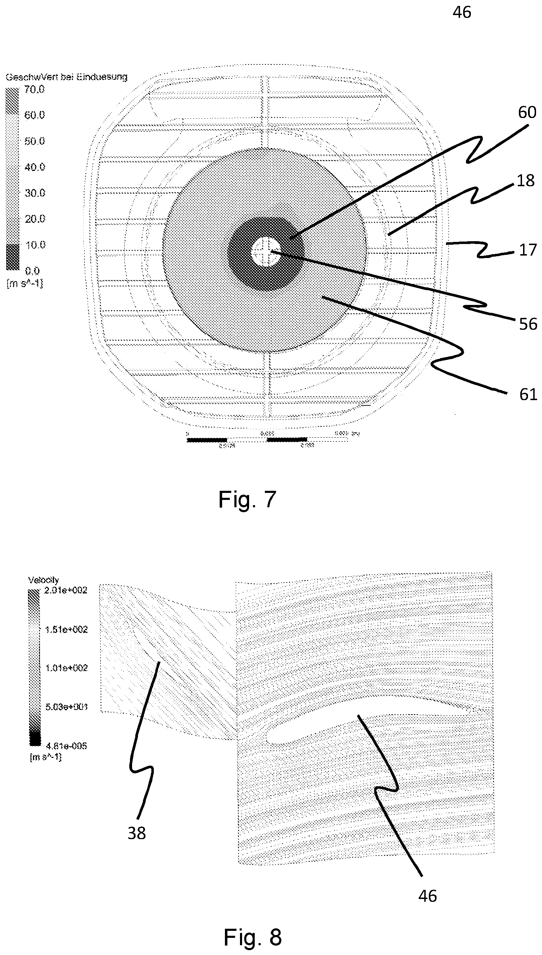

Die Sprühdüse 43 ist als längliches Rohr 55 mit einem Düsenaustritt 56 ausgebildet, welches einen Anschlussnippel 57 aufweist, auf welchem die Zuführleitung 58 angeschlossen ist. In Figur 7 ist das Diagramm der Geschwindigkeitsverteilung der ausströmenden Luft beim Düsenaustritt 56 gezeigt. Der dunkle Ring 60 um den Düsenaustritt 56 zeigt an, dass im Windschatten des elektrischen Antriebs oder Motors 47 praktisch keine Luftströmung vorhanden ist, damit sich der Sprühnebel ungehindert ausbilden kann. Der graue Bereich 61 zeigt, dass hier eine starke Luftströmung auftritt, welche den aus dem Düsenaustritt 56 austretenden Sprühnebel aufnimmt und dadurch verhindert, dass die Tropfen aus der Luftströmung nach aussen austreten und dadurch in der Anwendung verloren sind. Diese Erklärung gilt für beide beschriebenen Ausführungen der Gebläsesprühvorrichtung 10.

Figur 8 ist eine Darstellung der Luftströmungen mittels Strömungslinien im Bereich des Schaufelrads 38 und im Bereich der Leitschaufeln 46. Daraus ist ersichtlich, dass die durch das Schaufelrad 38 rotierende Luftströmung durch die Leitschaufeln 46 in eine gleichmässige drallfreie oder annähernd drallfreie Luftströmung, d.h. eine lineare Luftströmung etwa in axialer Richtung, überführt wird. Durch diese drallfreie oder annähernd drallfreie Luftströmung in axialer Richtung kann mit weniger Energie eine höhere Wurfweite des Sprühnebels erreicht werden.

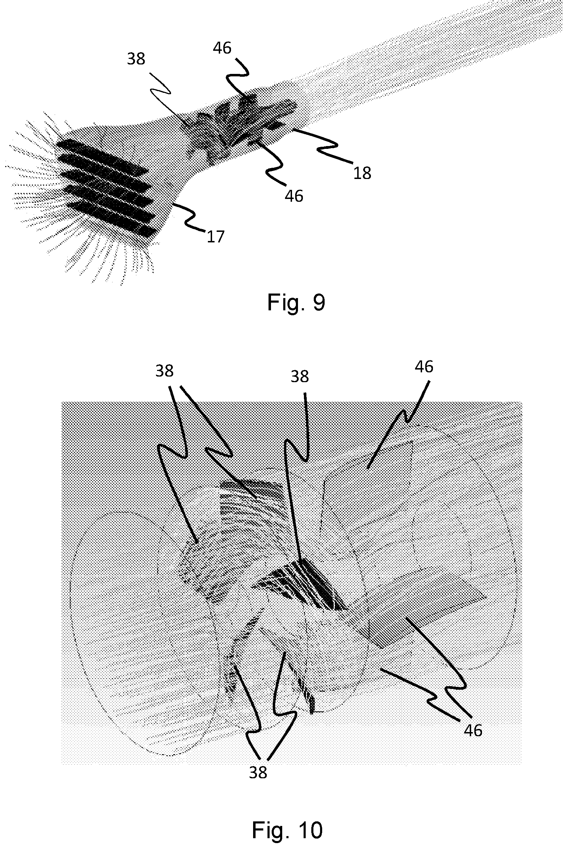

In Figur 9 ist die Luftströmung mittels Strömungslinien in perspektivischer Darstellung vom Lufteintritt bis zum Luftaustritt aus der Gebläsesprühvorrichtung 10 ersichtlich.

Figur 10 zeigt schematisch die Luftströmung mittels Strömungslinien in perspektivischer Darstellung im Bereich des - Schaufelrad 38 und der Leitschaufeln 46. Daraus ist sehr gut ersichtlich, dass im Bereich des Schaufelrads 38 - hier mit fünf Schaufeln 38 dargestellt - eine rotierende Luftströmung oder Verwirbelungen erzeugt werden, welche mittels der vier Leitschaufeln 46 in eine drallfreie oder annähernd drallfreie lineare Luftströmung überführt werden.

Die Anzahl Leitschaufeln 46 kann variieren je nach Anforderung und Ausgestaltung des Schaufelrads 38. In der Regel beträgt die Anzahl drei bis vier, kann jedoch auch fünf oder mehr betragen. In den obigen Ausführungsbeispielen sind fünf Schaufeln 38 vorgesehen. Auch diese können je nach Anforderung und Ausgestaltung zwischen fünf und siebzehn betragen.

## Patentansprüche

1. Gebläsesprühvorrichtung (10) mit einem Gehäuse, welches ein elektrisch angetriebenes Gebläse (19;) mit einem Schaufelrad (38) und eine Sprühdüse (20; 43) umfasst, mit einer Flüssigkeitszufuhrleitung (21), die in die Sprühdüse (20; 43) mündet, **dadurch gekennzeichnet, dass** das Gehäuse (16) einen trichterförmigen Ansaugkanal (17) und einen rohrförmigen Ausblaskanal (18) aufweist und im rohrförmigen Ausblaskanal (18) in Strömungsrichtung nach dem Schaufelrad (38) Leitschaufeln (46) vorgesehen sind, welche derart ausgebildet und angeordnet sind, dass die durch das Schaufelrad (38) erzeugten Verwirbelungen in eine gleichmässige, drallfreie oder annähernd drallfreie Luftströmung in axialer Richtung übergehen, und die Sprühdüse (20; 43) derart in der Längsachse im Ausblaskanal (18) angeordnet ist, se-dass die drallfreie Luftströmung den aus der Sprühdüse (20) austretenden Sprühnebel aufnimmt, und ein elektrisch betätigtes Ventil (22) in der Flüssigkeitszufuhrleitung (21) vorgesehen ist, um die Flüssigkeitszufuhr zur Sprühdüse (20; 43) ein- und auszuschalten, und eine elektronische Steuerung (28) mit einer Regeleinheit (33) für das elektrische Gebläse (19) vorgesehen ist, um die Luftströmungsgeschwindigkeit abgestimmt auf die jeweilige Anwendung einzustellen

2. Gebläsesprühvorrichtung (10) nach Anspruch 1, **dadurch gekennzeichnet, dass** das elektrische Gebläse (19), in einem länglichen, rohförmigen Gehäuse (42) angeordnet ist, welches gleichzeitig zur mechanischen Befestigung der Sprühdüse (43) dient.

3. Gebläsesprühvorrichtung (10) nach Anspruch 1 oder 2, **dadurch gekennzeichnet, dass** das Gebläse (19) schwimmend im Gehäuse (16) gelagert sind ist.

4. Gebläsesprühvorrichtung (10) nach einem der Ansprüche 1 bis 3, **dadurch gekennzeichnet, dass** das Gebläse (19) im Ausblaskanal (18) montiert ist, und die Sprühdüse (20) in Strömungsrichtung (A) auf einem ersten Abstand (d1) von der Ausblasseite des Gebläses (19) im Ausblaskanal und auf einem zweiten Abstand (d2) zum Auslauf des Ausblaskanals angeordnet ist.

5. Gebläsesprühvorrichtung (10) nach einem der Ansprüche 1 bis 4, **dadurch gekennzeichnet, dass** der Ansaugkanal (17) eine Einströmöffnung (35) mit einem ersten, grossen Querschnitt (B) und eine Ausströmöffnung (36) mit einem zweiten, kleineren Querschnitt (C) aufweist.

6. Gebläsesprühvorrichtung nach einem der Ansprüche 1 bis 5, **dadurch gekennzeichnet, dass** die Sprühdüse (20) eine Vollkegeldüse ist.

7. Gebläsesprühvorrichtung nach einem der Ansprüche 1 bis 5, **dadurch gekennzeichnet, dass** die Sprühdüse (20) eine Hohlkegeldüse ist.

8. Gebläsesprühvorrichtung nach einem der Ansprüche 1 bis 5, **dadurch gekennzeichnet, dass** die Sprühdüse (20) eine Injektordüse ist.

9. Gebläsesprühvorrichtung nach einem der Ansprüche 1 bis 5, **dadurch gekennzeichnet, dass** die Sprühdüse (20) eine Flachstrahldüse ist.

10. Gebläsesprühvorrichtung nach einem der Ansprüche 1 bis 4, **dadurch gekennzeichnet, dass** die Sprühdüse (20) eine Mehrstoffdüse ist.

11. Gebläsesprühvorrichtung nach einem der Ansprüche 1 bis 5, **dadurch gekennzeichnet, dass** die Sprühdüse (20) ein Piezo-Ultraschallzerstäuber ist.

12. Gebläsesprühvorrichtung nach einem der Ansprüche 1 bis 5, **dadurch gekennzeichnet, dass** die Sprühdüse (20) eine Spinning Disk ist.

13. Gebläsesprühvorrichtung nach einem der Ansprüche 1 bis 12, **dadurch gekennzeichnet, dass** sie tragbar ist.

14. Gebläsesprühvorrichtung nach einem der Ansprüche 1 bis 11, **dadurch gekennzeichnet, dass** sie auf einem Fahrgestell angebracht ist.

15. Verfahren zur Erzeugung eines Sprühnebels mit einer Gebläsesprühvorrichtung nach einem der Ansprüche 1 bis 14 und mit einem Sprühgerät (1) mit einer Druckregelung, **dadurch gekennzeichnet, dass** eine Sprühflüssigkeit für die jeweilige Anwendung ausgewählt wird, aus einer Auswahl von Sprühdüsen eine Sprühdüse mit einem bestimmten Sprühwinkel und einer bestimmten Tropfengrösse für die jeweilige Anwendung ausgewählt wird, die Sprühflüssigkeit mit einem für die jeweilige Anwendung oder Auswahl eingestellten Druck beaufschlagt wird und die Luftströmungsgeschwindigkeit des Gebläses (19) für die jeweilige Anwendung eingestellt wird.

## Claims

1. A fan spray device (10) having a housing which comprises an electrically driven fan (19) with an impeller (38) and a spray nozzle (20; 43), having a liquid supply line (21), which opens into the spray nozzle (20; 43), **characterized in that** the housing (16) has a funnel-shaped suction channel (17) and a tubular blow-out channel (18), and guide vanes (46) are provided in the tubular blow-out channel (18) after the impeller (38) in the flow direction, which are designed and arranged in such a manner that the turbulences generated by the impeller (38) transition into a uniform, swirl-free or approximately swirl-free air flow in the axial direction, and the spray nozzle (20; 43) is arranged in the longitudinal axis in the blow-out channel (18) such that the swirl-free air flow receives the spray mist emerging from the spray nozzle (20), and an electrically actuated valve (22) is provided in the liquid supply line (21) in order to switch on and off the liquid supply to the spray nozzle (20; 43), and an electronic controller (28) with a control unit (33) for the electric fan (19) is provided for adjusting the air flow speed in adapted to the respective application.

2. The fan spray device (10) according to claim 1, **characterized in that** the electric fan (19) is arranged in an elongated, tubular housing (42) which is simultaneously used for mechanically fastening the spray nozzle (43).

3. The fan spray device (10) according to claim 1 or 2, **characterized in that** the fan (19) is mounted in a floating manner in the housing (16).

4. The fan spray device (10) according to any one of claims 1 to 3, **characterized in that** the fan (19) is mounted in the blow-out channel (18), and the spray nozzle (20) is arranged in the flow direction (A) at a first distance (d1) from the blow-out side of the fan (19) in the blow-out channel and at a second distance (d2) from the outlet of the blow-out channel.

5. The fan spray device (10) according to any one of claims 1 to 4, **characterized in that** the suction channel (17) has an inflow opening (35) with a first, large cross section (B) and an outflow opening (36) with a second, smaller cross section (C).

6. The fan spray device according to one of Claims 1 to 5, **characterized in that** the spray nozzle (20) is a full cone nozzle.

7. The fan spray device according to any one of claims 1 to 5, **characterized in that** the spray nozzle (20) is a hollow cone nozzle.

8. The fan spray device according to any one of claims 1 to 5, **characterized in that** the spray nozzle (20) is an injector nozzle.

9. The fan spray device according to any one of claims 1 to 5, **characterized in that** the spray nozzle (20) is a flat jet nozzle.

10. The fan spray device according to any one of claims 1 to 4, **characterized in that** the spray nozzle (20) is a multi-component nozzle.

11. The fan spray device according to any one of claims 1 to 5, **characterized in that** the spray nozzle (20) is a piezo ultrasonic atomizer.

12. The fan spray device according to any one of claims 1 to 5, **characterized in that** the spray nozzle (20) is a spinning disk.

13. The fan spray device according to any one of claims 1 to 12, **characterized in that** it is portable.

14. The fan spray device according to any one of claims 1 to 11, **characterized in that** it is installed on a chassis.

15. A method for generating a spray mist with a fan spray device according to any one of claims 1 to 14 and with a spray apparatus (1) having pressure regulation, **characterized in that** a spray liquid is selected for a respective application, a spray nozzle with a specific spray angle and a specific droplet size for the respective application is selected from a selection of spray nozzles, a pressure adjusted for the respective application or selection is applied to the spray liquid, and the air flow rate of the fan (19) is adjusted for the respective application.

## Revendications

1. Dispositif de pulvérisation de soufflante (10) avec un boîtier, lequel comprend une soufflante (19) entraînée de façon électrique avec une roue à palettes (38) et une buse de pulvérisation (20 ; 43), avec un conduit d'amenée de liquide (21), lequel débouche dans la buse de pulvérisation (20 ; 43), **caractérisé en ce que** le boîtier (16) présente un canal d'aspiration (17) en forme d'entonnoir et un canal d'évacuation par soufflage (18) en forme de tube, et **en ce que** des palettes directrices (46) sont prévues dans le canal d'évacuation par soufflage (18) en forme de tube dans le sens du flux en aval de la roue à palettes (38), lesquelles palettes sont formées et disposées de telle sorte que les tourbillons produits par la roue à palettes (38) sont transformés en un flux d'air régulier, sans tourbillons ou approximativement sans tourbillons, dans la direction axiale, et **en ce que** la buse de pulvérisation (20 ; 43) est disposée dans le canal d'évacuation par soufflage (18) dans l'axe longitudinal de telle sorte que le flux d'air sans tourbillons reçoit le brouillard de pulvérisation sortant de la buse de pulvérisation (20), et **en ce qu'**une soupape actionnée électriquement (22) est prévue dans le conduit d'amenée de liquide (21) pour activer et désactiver l'amenée de liquide vers la buse de pulvérisation (20 ; 43), et **en ce qu'**une commande électronique (28) avec une unité de régulation (33) pour la soufflante électrique (19) est prévue, pour régler la vitesse d'écoulement de l'air en fonction de l'application respective.

2. Dispositif de pulvérisation de soufflante (10) selon la revendication 1, **caractérisé en ce que** la soufflante électrique (19) est disposée dans un boîtier (42) tubulaire allongé, lequel sert simultanément à la fixation mécanique de la buse de pulvérisation (43).

3. Dispositif de pulvérisation de soufflante (10) selon la revendication 1 ou 2, **caractérisé en ce que** la soufflante (19) est montée dans le boîtier (16) de façon flottante.

4. Dispositif de pulvérisation de soufflante (10) selon l'une quelconque des revendications 1 à 3, **caractérisé en ce que** la soufflante (19) est montée dans le canal d'évacuation par soufflage (18), et **en ce que** la buse de pulvérisation (20) est disposée dans le sens du flux (A) avec une première distance (d1) au côté d'évacuation par soufflage de la soufflante (19) dans le canal d'évacuation par soufflage et avec une deuxième distance (d2) à la sortie du canal d'évacuation par soufflage.

5. Dispositif de pulvérisation de soufflante (10) selon l'une quelconque des revendications 1 à 4, **caractérisé en ce que** le canal d'aspiration (17) présente une ouverture d'admission (35) avec une première section (B) de grande taille et une ouverture d'admission (36) avec une deuxième section (C) de taille plus petite.

6. Dispositif de pulvérisation de soufflante selon l'une quelconque des revendications 1 à 5, **caractérisé en ce que** la buse de pulvérisation (20) est une buse de pulvérisation à cône plein.

7. Dispositif de pulvérisation de soufflante selon l'une quelconque des revendications 1 à 5, **caractérisé en ce que** la buse de pulvérisation (20) est une buse de pulvérisation à cône creux.

8. Dispositif de pulvérisation de soufflante selon l'une quelconque des revendications 1 à 5, **caractérisé en ce que** la buse de pulvérisation (20) est une buse d'injection.

9. Dispositif de pulvérisation de soufflante selon l'une quelconque des revendications 1 à 5, **caractérisé en ce que** la buse de pulvérisation (20) est une buse à jet plat.

10. Dispositif de pulvérisation de soufflante selon l'une quelconque des revendications 1 à 4, **caractérisé en ce que** la buse de pulvérisation (20) est une buse multiple.

11. Dispositif de pulvérisation de soufflante selon l'une quelconque des revendications 1 à 5, **caractérisé en ce que** la buse de pulvérisation (20) est un atomiseur à ultrasons piézoélectrique.

12. Dispositif de pulvérisation de soufflante selon l'une quelconque des revendications 1 à 5, **caractérisé en ce que** la buse de pulvérisation (20) est un disque tournant.

13. Dispositif de pulvérisation de soufflante selon l'une quelconque des revendications 1 à 12, **caractérisé en ce que** le dispositif est portable.

14. Dispositif de pulvérisation de soufflante selon l'une quelconque des revendications 1 à 11, **caractérisé en ce que** le dispositif est monté sur un châssis de véhicule.

15. Procédé pour la production d'un brouillard de pulvérisation avec un dispositif de pulvérisation de soufflante selon l'une quelconque des revendications 1 à 14 et avec un appareil de pulvérisation (1) avec une régulation de pression, **caractérisé en ce qu'**un liquide de pulvérisation est sélectionné pour l'application respective, **en ce qu'**une buse de pulvérisation avec un angle de pulvérisation défini et une taille de gouttes définie est sélectionnée pour l'application respective à partir d'une sélection de buses de pulvérisation, **en ce qu'**une pression réglée pour l'application respective ou pour la sélection est appliquée au liquide de pulvérisation et **en ce que** la vitesse de flux d'air de la soufflante (19) est réglée pour l'application respective.
